# EUROPEAN PATENT SPECIFICATION

(11) **EP 4 301 001 B1**
(45) Date of publication and mention of the grant of the patent: **25.02.2026**
(21) Application number: 22182031.9
(22) Date of filing: 29.06.2022
(51) Int. Cl.: H04W 4/021, H04W 4/024, H04W 4/029, H04W 4/30, G06Q 10/047, G06Q 10/063, G06Q 50/08, G06Q 50/40, G06Q 90/00

(54) **A CENTRAL NETWORK PROCESSING UNIT, A FIRST USER DEVICE AND COMPUTER-IMPLEMENTED METHODS FOR PROVIDING AND OBTAINING SITE-SPECIFIC MANAGEMENT INFORMATION ASSOCIATED WITH A RESTRICTED ACCESS CONSTRUCTION SITE**
ZENTRALE NETZWERKVERARBEITUNGSEINHEIT, EINE ERSTE BENUTZERVORRICHTUNG UND COMPUTERIMPLEMENTIERTE VERFAHREN ZUM BEREITSTELLEN UND ABRUFEN VON BAUSTELLENSPEZIFISCHEN VERWALTUNGSINFORMATIONEN IM ZUSAMMENHANG MIT EINER BAUSTELLE MIT BESCHRÄNKTEM ZUGANG
UNITÉ DE TRAITEMENT DE RÉSEAU CENTRAL, PREMIER DISPOSITIF UTILISATEUR ET PROCÉDÉS MIS EN UVRE PAR ORDINATEUR PERMETTANT DE FOURNIR ET D'OBTENIR DES INFORMATIONS DE GESTION SPÉCIFIQUE AU SITE ASSOCIÉES À UN SITE DE CONSTRUCTION À ACCÈS RESTREINT

(43) Date of publication of application: 03.01.2024
(73) Proprietor: VOLVO TRUCK CORPORATION, 405 08 Göteborg (SE)
(72) Inventor: STENER, Patrik, 644 30 Torshälla (SE); ABBASI, Ataollah, 442 39 Kungälv (SE); FEIERABEND, Maja, 534 60 Vedum (SE); AMIRABADI, Neda, 633 60 Eskilstuna (SE); LINDMARK, Elianne, 632 22 Eskilstuna (SE); GIRI, Deepika, 560093 Bangalore (IN)
(74) Representative: Zacco Sweden AB

(56) References cited:
- CN-A- 113 189 621
- US-A1- 2009 105 947
- US-A1- 2021 086 792
- US-A1- 2021 258 719

## Description

### TECHNICAL FIELD

Embodiments herein relate in general to driver assistance for a restricted access construction site. In particular, embodiments herein relate to a central network processing unit and a computer-implemented method for providing site-specific management information associated with a restricted access construction site a first user device in a wireless communications network. The embodiments herein also related to a first user device associated with a first vehicle and a computer-implemented for obtaining site-specific management information associated with a restricted access construction site. Further, the embodiments herein also relate to a computer program product for performing the computer implemented method and a computer program product carrier. Although the embodiments herein will be described mainly with respect to heavy-duty vehicles such as trucks, buses, construction machines, the embodiments herein may also be applied for other vehicles such as small cargo transport and cars.

### BACKGROUND

A conventional construction site is normally surrounded by a fence, walls or other type of delimiters that acts a boundary of the construction site. Only vehicles and personnel with approved access to the construction site are allowed to pass the delimiters and enter the constructions site, mainly for security reasons. Such a construction site may be referred to in general and herein as a restricted access construction site. Depending on the actual site and type of construction project performed, this restricted access construction site may comprise various different service functions arranged to provide the vehicles and people operating with the construction site with various different services. These different services may comprise, for example, vehicle charging stations, driver/vehicle facilities, restaurants, cafés, parking, garbage stations, etc. The different service functions may be co-located, located near each other or remotely located from each other, at different services areas/buildings within the construction site. These different service areas/buildings may also be moved around within the confines of the constructions site depending on how the constructions site develops over time. Hence, it may be difficult for vehicles or personnel operating within the constructions site to navigate the construction site in a time-efficient manner when attempting to use any of the various different services provided within the restricted access construction site. In addition, the changeable nature of a construction site may also lead difficulties in navigating the roads within the construction site when a vehicle is performing its operations within the construction site, since they also may be subject to change.

CN113189621A discloses a construction plane transportation management tool based on BIM and Beidou. The tool comprises an entrance application two-dimensional code, a construction site map navigation application terminal and an on-site responsibility management terminal. The entrance application two-dimensional code is arranged at the entrance of the construction site; a construction vehicle driver scans the entry application two-dimensional code at the entrance position of the construction site, enters a construction site map login interface of the construction site map navigation application terminal, fills basic information of a vehicle license plate number, a material category, a material quantity and weight in the construction site map login interface, generates an entry application and sends the entry application to the site responsibility management terminal; a manager completes vehicle entry approval on the site responsibility management terminal according to the use purpose, the use time and the use position of the entry material, and marks the driving destination of the vehicle in the map, the vehicle is positioned on the map of the construction site, and the vehicle enters the construction site and drives to the destination according to the vehicle navigation guidance.

US2009105947A1 relates to a computer system and method for providing warnings to a user for completing tasks from the task list, and discloses that a navigation device provides a user with task reminders when he/she is near a location where it is possible to perform the task.

### SUMMARY

It is an object of embodiments herein to provide a central network processing unit, a first user device associated with a first vehicle, and computer-implemented methods, along with a computer program product and carrier, for providing and obtaining site-specific management information associated with a restricted access construction site that seeks to mitigate, alleviate, or eliminate all or at least some of the above-discussed drawbacks of presently known solutions.

According to a first aspect of embodiments herein, the object is achieved by a computer implemented method performed by a central network processing unit for providing site-specific management information associated with a restricted access construction site to a first user device in a wireless communications network, wherein the first user device is associated with a first vehicle being at or on-route to enter the restricted access construction site. The method comprise obtaining vehicle characteristic information from the first vehicle and/or the first user device. The method also comprises determining site-specific management information associated with the restricted access construction site based on the obtained vehicle characteristic information. The method further comprises providing the determined site-specific management information to the first user device.

By obtaining specific vehicle characteristic information from an inbound vehicle, a updated and specific set of site-specific management information regarding the restricted access construction site that is directly suitable for the specific inbound vehicle may be determined and provided to the first user device. This means that, upon entering the restricted access construction site, the driver of the vehicle may easily obtain the site-specific management information necessary in order to navigate the construction site in a time-efficient manner. Hence, the utilization and effectiveness of the restricted access construction site is improved.

In some embodiments, the site-specific management information may comprise real-time navigational information within the restricted access construction site. This is advantageous since the roads within the restricted access construction site may be changed and redrawn as the construction site progresses over time. Hence, for example, the optimal path towards a dump site or load site within the restricted access construction site may be indicated to the driver of the vehicle. The site-specific management information comprises information indicating available resources and services within the restricted access construction site. Advantageously, this may provide the driver of the vehicle with updated information regarding which resources and services that are offered to the driver at a certain moment in time within the restricted access construction site. For example, the driver may be presented with information indicating whether there is a bathroom facility, a restaurant, a café, a charging or fueling station, etc., available to the driver within the restricted access construction site. The site-specific management information also comprises information indicating real-time scheduling information for use of resources and services within the restricted access construction site. This updated utilization information regarding the available resources and services may advantageously help the driver in his decision on when to use the different resources and services within the restricted access construction site. Additionally, real-time presence information of one or more second user devices associated with one or more second vehicles, respectively, within the restricted access construction site. This means that the driver of a vehicle may locate another driver of another vehicle that is also on-route or already present within the restricted access construction site. This may help facilitate co-operation and/or social interaction between the two drivers of the two vehicles, e.g. when/where to meet up for coffee, etc.

In some embodiments, the vehicle characteristic information may comprise a location of the first vehicle. The location of the inbound first vehicle advantageously allows, for example, the arrival time at the restricted access construction site of the inbound first vehicle, to be determined, which in turn will allow for a time-efficient planning of the resources and services offered within the restricted access construction site. For example, availability of an on-site charging station may be determined based on the arrival time of inbound vehicles to the restricted access construction site. This may also be used to inform the driver of the current speed limits to which to adhere to. Optionally, the vehicle characteristic information may comprise a fuel/energy level of the first vehicle. This may assist in planning the refueling or recharging of inbound vehicles at the restricted access construction site. The vehicle characteristic information comprises information indicating scheduled operations to be performed by the first vehicle within the restricted access construction site. This means, for example, that the first vehicle may be directly guided to the correct location within the restricted access construction site based on its current work order, task or mission. Here it should also be noted that each of the examples of the vehicle characteristic information mentioned above may also advantageously be used by the driver to plan/optimize the time spent within the restricted access construction site, while also assisting a site manager/personnel responsible for the restricted access construction site to plan/optimize the time spent within the restricted access construction site for all inbound and present vehicles, e.g. to avoid excess queuing, maximize utilization of resource and services, and obtain information of inbound deliveries and work orders.

In some embodiments, the method may further comprise obtaining vehicle characteristic information from each of the one or more second vehicles, and/or from one or more second user devices that is associated with the one or more second vehicles, respectively, being at or on-route to enter the restricted access construction site. In this case, according to some embodiments, the method may also comprise determining the site-specific management information associated with the restricted access construction site based on the obtained vehicle characteristic information from each of the one or more second vehicles and/or from one or more second user devices that is associated with the one or more second vehicles, respectively. This means, for example, that the driver of a vehicle may be presented with information regarding other drivers of other vehicles that is also on-route or already present within the restricted access construction site. This may further help facilitate co-operation and/or social interaction between the drivers of the different vehicles, e.g. obtaining information regarding when/where drivers of other vehicle will be available for lunch or coffee, etc.

In some embodiments, the method may further comprise obtaining driver preference information from the first user device originating from the driver of the first vehicle. In this case, according to some embodiments, the method may also comprise determining the site-specific management information associated with the restricted access construction site based on the obtained driver preference information. This means, for example, that the site specific management information available to the driver of the first vehicle may be customized to the requirements/preferences of the driver of the first vehicle.

According to a second aspect of embodiments herein, the object is achieved by a central network processing unit for providing site-specific management information associated with a restricted access construction site to a first user device in a wireless communications network, wherein the first user device is associated with a first vehicle being at or on-route to enter the restricted access construction site. The central network processing unit comprise processing circuitry and a memory, wherein the processing circuitry is configured to obtain vehicle characteristic information from the first vehicle and/or the first user device. The processing circuitry is also configured to determine site-specific management information associated with the restricted access construction site based on the obtained vehicle characteristic information. Further, the processing circuitry is configured to provide the site-specific management information to the first user device. The vehicle characteristic information comprise information indicating scheduled operations to be performed by the first vehicle within the restricted access construction site. Site-specific management information comprise information indicating available resources within the restricted access construction site and real-time scheduling information for use of resources within the restricted access construction site.

In some embodiments, site-specific management information further comprise one or more of: real-time navigational information within the restricted access construction site, and real-time presence information of one or more second user devices associated with one or more second vehicles, respectively, within the restricted access construction site.

In some embodiments, the vehicle characteristic information comprise one or more of: a location of the first vehicle, and a fuel/energy level of the first vehicle.

In some embodiments, the processing circuitry may be configured to obtain vehicle characteristic information from each of the one or more second vehicles, and/or from one or more second user devices that is associated with the one or more second vehicles, respectively, being at or on-route to enter the restricted access construction site. Here, the processing circuitry may also be configured to determine the site-specific management information associated with the restricted access construction site based on the obtained vehicle characteristic information from each of the one or more second vehicles and/or from one or more second user devices that is associated with the one or more second vehicles, respectively.

In some embodiments, the processing circuitry may be configured to obtain driver preference information from the first user device originating from the driver of the first vehicle. Here, the processing circuitry may also be configured to determine the site-specific management information associated with the restricted access construction site based on the obtained driver preference information.

According to a third aspect there is provided a computer-implemented method performed by a first user device associated with a first vehicle for obtaining site-specific management information associated with a restricted access construction site. The method comprise determining that the first vehicle is at or on-route to enter the restricted access construction site as automatically recognized by the first user device via a work order indicating a next upcoming location for the first vehicle in an application operating on the first user device. The method also comprise providing vehicle characteristic information associated with the first vehicle to a central network processing unit in a wireless communications network, wherein the vehicle characteristic information comprise information indicating scheduled operations to be performed by the first vehicle within the restricted access construction site, and wherein the information indicating scheduled operations to be performed by the first vehicle within the restricted access construction site, via the work order, is usable by the central network processing unit to determine which of the services and resources within the restricted access construction site that the first vehicle may be interested in utilizing. Further, the method comprise obtaining site-specific management information associated with the restricted access construction site based on the provided vehicle characteristic information. Also, the method comprise displaying the obtained site-specific management information associated with the restricted access construction site on the first user device. The site-specific management information comprise information indicating available resources within the restricted access construction site and real-time scheduling information for use of resources within the restricted access construction site.

In some embodiments, the method may comprise determining driver preference information via a user interface of the first user device from the driver of the first vehicle. The method may also comprise providing the determined driver preference information to the central network processing unit in the wireless connected network. Additionally, the method may comprise obtaining site-specific management information associated with the restricted access construction site based on the provided driver preference information.

According to a fourth aspect there is provided a first user device associated with a first vehicle for obtaining site-specific management information associated with a restricted access construction site. The first user device comprise processing circuitry and a memory, wherein the processing circuitry is configured to determine that the first vehicle is at or on-route to enter the restricted access construction site as automatically recognized by the first user device via a work order indicating a next upcoming location for the first vehicle in an application operating on the first user device. The processing circuitry is also configured to provide vehicle characteristic information associated with the first vehicle to a central network processing unit in a wireless communications network, wherein the vehicle characteristic information comprise information indicating scheduled operations to be performed by the first vehicle within the restricted access construction site, and wherein the information indicating scheduled operations to be performed by the first vehicle within the restricted access construction site, via the work order, is usable by the central network processing unit to determine which of the services and resources within the restricted access construction site that the first vehicle may be interested in utilizing. Also, the processing circuitry is configured to obtain site-specific management information associated with the restricted access construction site based on the provided vehicle characteristic information. Further, the processing circuitry is configured to display the obtained site-specific management information associated with the restricted access construction site on the first user device. The site-specific management information comprise information indicating available resources within the restricted access construction site and real-time scheduling information for use of resources within the restricted access construction site.

In some embodiments, the processing circuitry may be configured to determine driver preference information via a user interface of the first user device from the driver of the first vehicle, provide the determined driver preference information to the central network processing unit in the wireless connected network, and obtain site-specific management information associated with the restricted access construction site based on the provided driver preference information.

In some embodiments, the first user device is a stand-alone wireless communications device, or a wireless communications device integrated with the first vehicle, arranged to operate in a wireless communications network.

According to a fifth aspect of the embodiments herein, the object is achieved by a computer program product comprising instructions which, when executed in a processing circuitry, cause the processing circuitry to carry out the methods described above. According to a sixth aspect of the embodiments herein, the object is achieved by a carrier containing any of the computer program products described above, wherein the carrier is one of an electronic signal, optical signal, radio signal, or computer-readable storage medium. The computer readable storage medium may be any type of memory device, including one of a removable non-volatile random-access memory, a hard disk drive, a floppy disk, a CD-ROM, a DVD-ROM, a USB memory, an SD memory card, or a similar computer readable medium known in the art.

Effects and features of the second through sixth aspects are to a large extent analogous to those described above in connection with the first aspect. Embodiments mentioned in relation to the first aspect are largely compatible with the second through sixth aspects.

### BRIEF DESCRIPTION OF THE DRAWINGS

Features and advantages of the embodiments will become readily apparent to those skilled in the art by the following detailed description of exemplary embodiments thereof with reference to the accompanying drawings, wherein:
- Fig. 1: is a schematic illustration of embodiments of a central network processing unit and a first user device associated with a heavy-duty vehicle in a communications system,
- Fig. 2: is a schematic illustration of a restricted access construction site for which site-specific management information may be provided to the first user device according to some embodiments,
- Figs. 3A-3D: are schematic illustrations of a user interface of the first user device for displaying information to a driver of the heavy-duty vehicle to which the first user device is associated according to some embodiments,
- Fig. 4: is a flowchart illustrating embodiments of a method performed by a central network processing unit according to some embodiments,
- Fig. 5: is another flowchart illustrating embodiments of a method performed by a first user device according to some embodiments,
- Fig. 6: is schematic block diagram illustrating embodiments of a central network processing unit, and
- Fig. 7: is schematic block diagram illustrating embodiments of a first user device.

### DETAILED DESCRIPTION

The invention will now be described more fully hereinafter with reference to the accompanied drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description. It is to be understood that the present invention is not limited to the embodiments described herein and illustrated in the drawings; rather, the skilled person will recognize that many changes and modifications may be made within the scope of the appended claims.

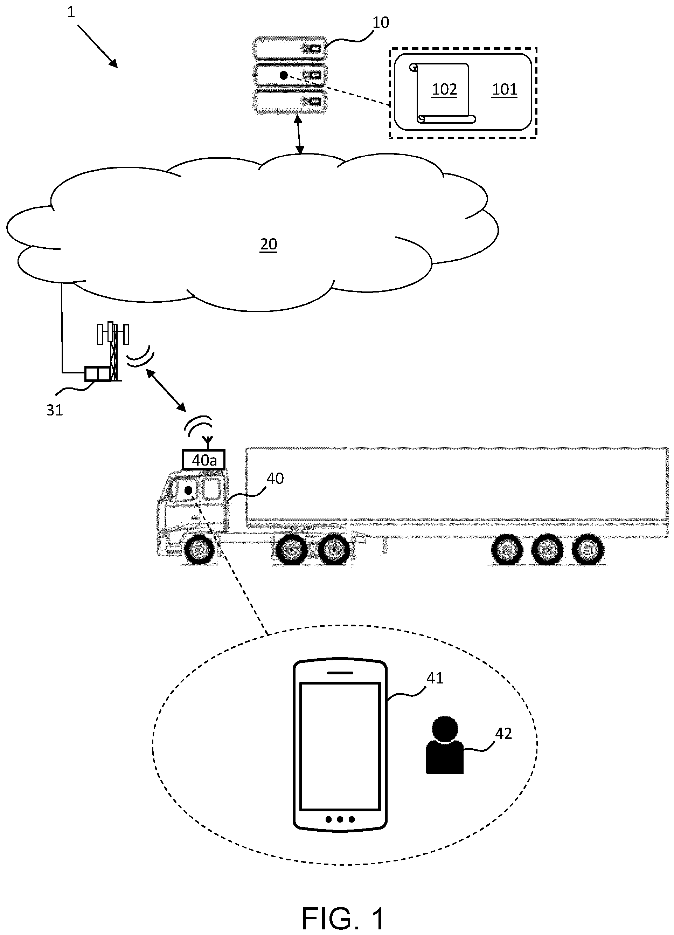

Fig. 1 illustrates an example of a communications system 1 in which embodiments of a central network processing unit 10 and a first user device 41 associated with a vehicle 40 described herein may be implemented. In Fig. 1, one example of a vehicle 40 is shown. In this case, the vehicle 40 is exemplified as a heavy-duty vehicle combination for cargo transport. The vehicle 40 may comprise a truck or towing vehicle configured to tow a trailer unit in a known manner, e.g., by a fifth wheel connection. Optionally, the vehicle 40 may also be a working or construction machine, such as, a truck, a loader, an excavator or hauler. It should be noted that a heavy-duty vehicle may herein refer to a vehicle designed for the handling and transport of heavy loads, heavy objects, large quantities of item of goods, etc. The vehicle 40 may, for example, be one of an electric or hybrid vehicle, or possibly a gas, gasoline or diesel vehicle. The vehicle 40 may comprise an electric machine (in case of being an electric or hybrid vehicle) or an engine (such as an internal combustion engine in case of being a gas, gasoline or diesel vehicle). The vehicle 40 may further be manually operated, fully or semi-autonomous. Even though the embodiments herein are described mainly with respect to heavy-duty vehicles, such as, e.g. semi-trailer vehicles or trucks for cargo and goods transport, the embodiments herein should not be considered restricted to this particular type of vehicle but may also be used in other types of vehicles, such as, a car, a bus, a marine vessel, etc.

The central network processing unit 10 may, for example, be a network node or server operating an application or cloud service 102 for one or more restricted access constructions site 101. This means the central network processing unit 10 may have access to updated information regarding each of the one or more restricted access constructions sites 101, such as, e.g. currently used paths or roads within each restricted access constructions site 101, the location and utilization of currently offered service and resources within the restricted access constructions site 101, etc. The central network processing unit 10 may also, for example, be configured to communicate with the first user device 41 via e.g. the Internet, using a wireless communications network 20. The wireless communications network 20 may comprise a network node or radio base station 31 configured to establish a wireless connection either directly with the first user device 41 associated with a vehicle 40 or via an on-board connectivity device, OCD 40a of the vehicle 40. Here, the on-board connectivity device, OCD 40a of the vehicle 40 may be comprise or be configured to communicate with the first user device 41.

The first user device 41 is associated with the vehicle 40. In some embodiments, the first user device 41 may be associated with the vehicle 40 and/or driver 42 of the vehicle 40 by an action of the driver 42 of the vehicle 40. For example, a driver 42 of the vehicle 40 may provide information identifying the vehicle 40 and/or driver 42 of the vehicle 40 to the wireless device 41. This may, for example, be performed by the driver 42 logging into an application operating on the wireless device 41 via a user interface of the wireless device 41 and providing said information. Optionally, in some embodiments, the first user device 41 may be associated with the vehicle 40 by being integrated in the vehicle 40. In this case, the first user device 40 may be permanently associated with the vehicle 40, while the driver 42 may need to log into an application operating on the wireless device 41 via a user interface of the wireless device 41 and provide information associated the first user device 41 with the driver 42. Optionally, the first user device 41 may be associated with the vehicle 40 and/or driver 42 of the driver 42 of the vehicle 40 via predetermined or default settings. By being associated with the vehicle 40 and/or driver 42 of the driver 42 of the vehicle 40, the first user device 41 may be comprise, obtain or be provided with information associated with the vehicle 40 and/or driver 42 of the vehicle 40. This information associated with the vehicle 40 may comprise operational information, such as, e.g. location and fuel/energy levels, of the vehicle 40, while the information associated with the driver 42 of the vehicle 40 may, for example, comprise driver preference or presence information associated with the driver 42 of the vehicle 40.

The first user device 41 may be configured to determine that the vehicle 40 is at or on-route to the restricted access constructions site 101. This may, for example, be indicated by the driver 42 to the first user device 41 or be automatically recognized by the first user device 41 via a work order indicating the next upcoming location for the vehicle 40 in an application operating on the first user device 41. Here, the first user device 41 may transmit information to the central network processing unit 10 indicating that the vehicle 40 is at or on-route to the restricted access constructions site 101. In response, the central network processing unit 10 may provide the first user device 41 with information associated with the restricted access constructions site 101. Here, the central network processing unit 10 may obtain the information associated with the restricted access constructions site 101 from a database, memory or registry comprising the updated information associated with the restricted access constructions site 101. According to one example, the information associated with the restricted access constructions site 101 may be managed and updated by a site manager or personnel of the restricted access constructions site 101 with access to the database, memory or registry, e.g. via an application running on a general-purpose computer.

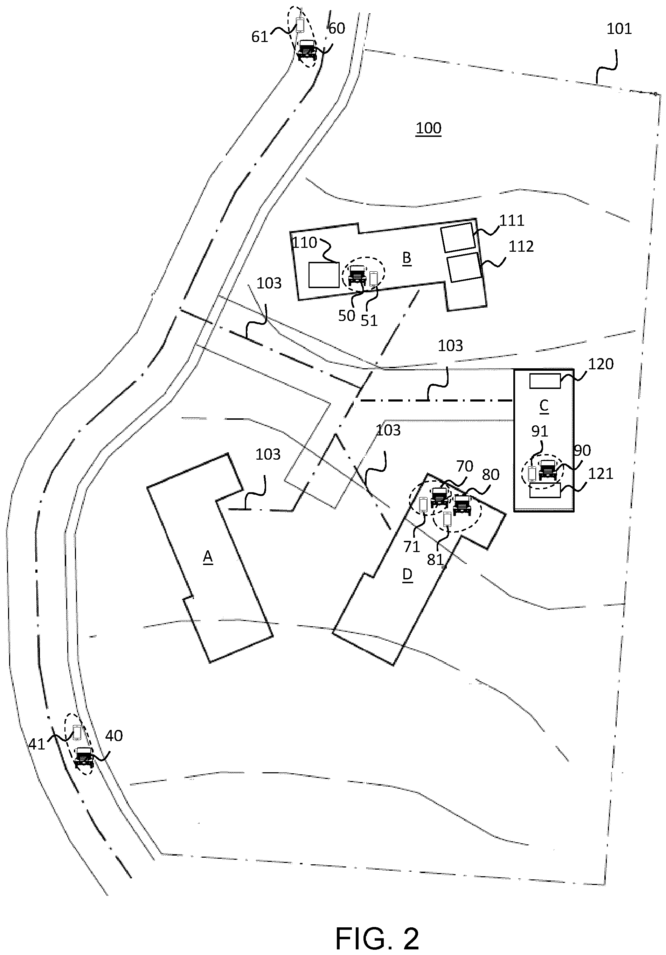

Fig. 2 shows a schematic illustration of an example of a restricted access construction site 101 for which site-specific management information may be provided to the first user device 41 by the central network processing unit 10 according to some embodiments. In this illustrative and non-limiting example, the first user device 41 associated with the vehicle 40 may be at or on-route to the restricted access construction site 101, i.e. travelling on a road towards the restricted access construction site 101. This may be performed as part of executing a work order. One example of a common work order may be delivering or collecting equipment, goods or other delivery/return items for any of the on-site services or resources within the restricted access construction site 101 or any of the active constructions projects being performed within the restricted access construction site 101. Another common example of a work order may comprise depositing loaded excavated material or retrieving on-site excavated material. Similar work orders may apply and be performed by any of the other the vehicles 50, 60, 70, 80, 90 respectively associated with corresponding user devices 51, 61, 71, 81, 91, which may already be located within the restricted access construction site 101 or also be on-route to the restricted access construction site 101.

The restricted access construction site 101 may comprise and offer a range of different service and resources 110, 111, 112, 120, 121 which currently may be located in different areas A, B, C, D within the restricted access construction site 101. These different service and resources 110, 111, 112, 120, 121 may, as the restricted access construction site 101 evolves or develops, over time be moved around the different areas A, B, C, D, be expanded or split into several new different areas, be cleared, repurposed or abandoned, etc. This means the restricted access construction site 101 may provide a continuously shifting landscape wherein a driver 42 of the vehicle 40 may not necessarily recognize or be able to familiarize himself with the locations of the different service and resources 110, 111, 112, 120, 121 within the restricted access construction site 101. Furthermore, within the restricted access construction site 101, the paths or roads 103 for the vehicles 40, 50, 60, 70, 80, 90 operating therein may also be subject to continuous change and be relocated. For example, in case area A is an excavation site for excavating material to be moved to a remotely located dump site, the path or road 103 leading down into, around and/or from the excavation site may be constantly changing as more material is being excavated and moved from the excavation site.

In the example shown in the example of Fig. 2, the area B within the restricted access construction site 101 comprise a first set of services and resources, such as, for example, sanitary and hygiene facilities and toilets 110, a breakroom 111, and/or restaurant/café 112, etc. Also, in the example shown in the example of Fig. 2, the area C within the restricted access construction site 101 may comprise a second set of services and resources, such as, for example, fueling or recharging stations 120, 121, while the area D may be an overnight parking area.

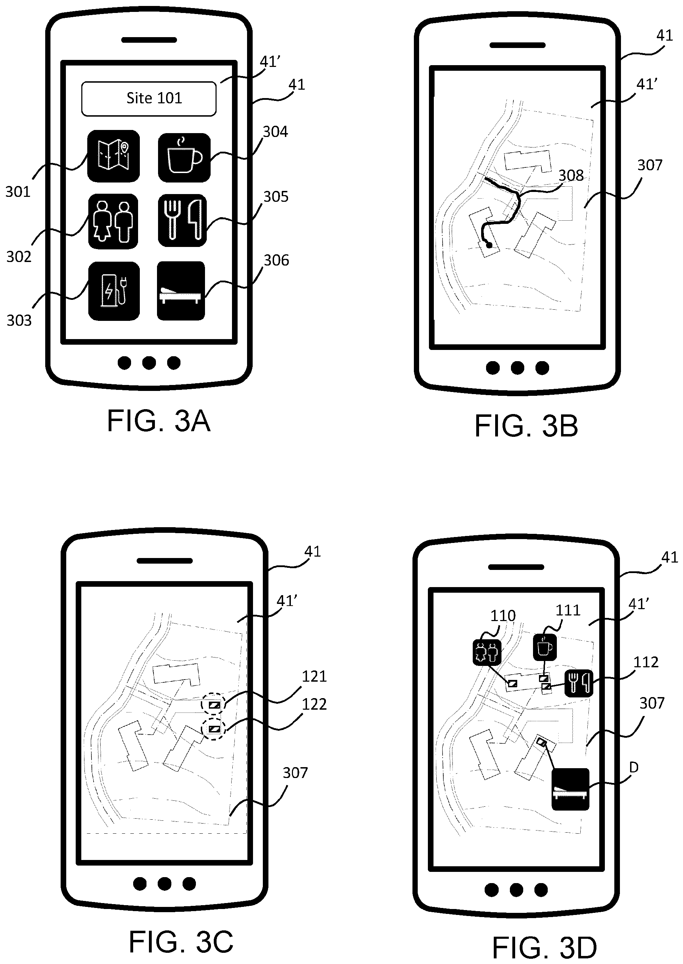

**Figs. 3A-3D** shows different schematic illustrations of examples of a graphical user interface, GUI, of an application operating on the first user device 41 that may be used to display information to the driver 42 of the vehicle 40 according to some embodiments. The first user device 41 may comprise a touch-sensitive screen 41' on which the GUI of an application operating on the first user device 41 is displayed to the driver 42 of the vehicle 40.

Fig. 3A shows, for example, a main page of the application operating on the first user device 41. The main page may comprise various different graphical objects or buttons 301-306 associated with different services and resources 110, 111, 112, 120, 121 offered within a restricted access construction site 101 to which the vehicle 40 is on-route or already located. The various different graphical objects or buttons 301-306 may be displayed based on information, or control information indicating which various different graphical objects or buttons 301-306 should be displayed to the driver 42, from the central network processing unit 10.

Fig. 3B shows, for example, a first navigation page of the application operating on the first user device 41. The first navigation page may comprise a map/photo 307 of the restricted access construction site 101 which may be used together with other graphical indicators 308 in order to indicate an updated route to the location of different areas A, B, C, D within a restricted access construction site 101 to which the vehicle 40 is on-route, e.g. according to a current work order. The first navigation page may, for example, be reached by a driver 42 by pressing the navigation button 301 on the main page shown in Fig. 3A.

Figs. 3C-3D shows, for example, a second and a third navigation page of the application operating on the first user device 41, respectively. The second and third navigation page may comprise a map/photo 307 of the restricted access construction site 101 which may be used together with other graphical indicators 308 in order to indicate an updated route to the location of different services and resources 110, 111, 112, 120, 121 within a restricted access construction site 101. For example, the second navigation page may comprise a map/photo 307 of the restricted access construction site 101 which may be used together with other graphical indicators 308 in order to indicate an updated route to the location of available charging stations 120, 121. Further information regarding the utilization of the charging stations obtained from the central network processing unit 10 may also be suitably indicated. This second navigation page may, for example, be reached by a driver 42 by pressing the navigation button 303 on the main page shown in Fig. 3A. Furthermore, the third navigation page may comprise a map/photo 307 of the restricted access construction site 101 which may be used together with other graphical indicators 308 in order to indicate an updated route to the location of the sanitary and hygiene facilities and toilets 110, the breakroom 111, the restaurant/café 112 and/or the overnight parking in area D. Further information regarding the utilization of the sanitary and hygiene facilities and toilets 110, the breakroom 111, the restaurant/café 112 and/or the overnight parking, obtained from the central network processing unit 10 may also be suitably indicated. This third navigation page may, for example, be reached by a driver 42 by pressing any of the corresponding buttons 302, 304, 305, 306 on the main page shown in Fig. 3A.

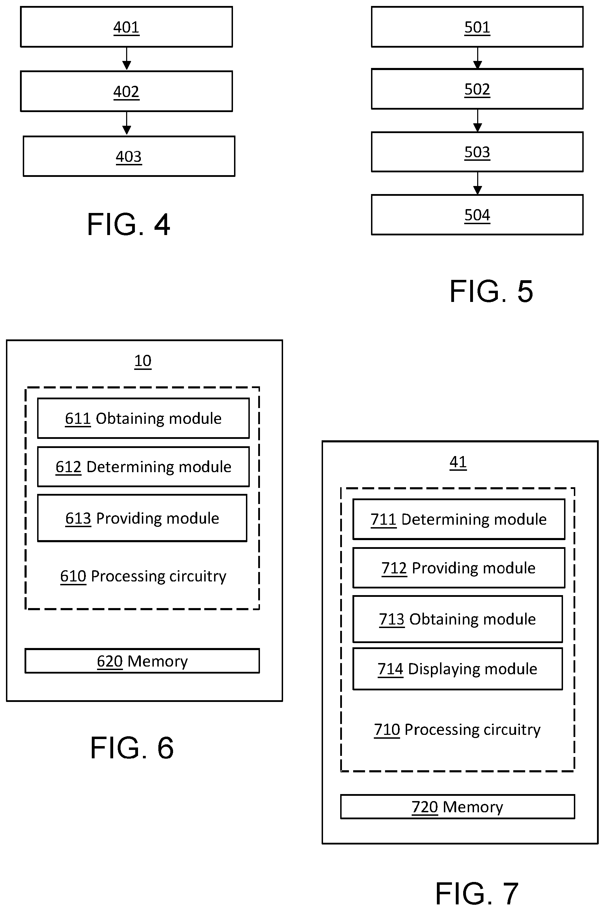

Examples of embodiments of a computer-implemented method performed by a central network processing unit 10 for providing site-specific management information associated with a restricted access construction site 101 to a first user device 41 in a wireless communications network 20, wherein the first user device 41 is associated with a first vehicle 40 being at or on-route to enter the restricted access construction site 101, will now be described with reference to the flowchart depicted in Fig. 4. Fig. 4 is an illustrated example of actions, steps or operations which may be performed by the central network processing unit 10 described above with reference to Fig. 1. The method may comprise the following actions, steps or operations.

**Action 401.** The central network processing unit 10 obtains vehicle characteristic information from the first vehicle 40 and/or the first user device 41. This means, for example, that the central network processing unit 10 may connect to the first user device 41, or the OCD 40a of the first vehicle 40, and retrieve measured vehicle characteristic information of the first vehicle 40 from the first vehicle 40. This may be performed upon determining that the first vehicle 40 is at or on-route towards the restricted access construction site 101. Optionally, the first user device 41, or the OCD 40a of the first vehicle 40, may transmit the measured vehicle characteristic information of the vehicle 40 from the first vehicle 40 to the central network processing unit 10 upon determining that the first vehicle 40 is at or on-route towards the restricted access construction site 101.

According to some embodiments, the vehicle characteristic information may comprise one or more of: a location of the first vehicle 40, a fuel/energy level of the first vehicle 40, and information indicating scheduled operations to be performed by the first vehicle 40 within the restricted access construction site 101. This means, for example, that the central network processing unit 10 may determine an estimated time of arrival of the first vehicle 40 within the restricted access construction site 101. Also, the central network processing unit 10 may estimate the fuel/energy requirement of the first vehicle 40 in order to determine whether or not the first vehicle 40 is in need of using any of the charging stations 120, 121 within the restricted access construction site 101. Furthermore, the information indicating scheduled operations to be performed by the first vehicle 40 within the restricted access construction site 101, e.g. via a work order, may also be used by the central network processing unit 10 to determine which of the services and resources 110, 111, 112, 120, 121 within the restricted access construction site 101 that the first vehicle 40 may be interested in utilizing.

In some embodiments, the central network processing unit 10 may obtain vehicle characteristic information from each of the one or more second vehicles 50, 60, 70, 80, 90, and/or from one or more second user devices 51, 61, 71, 81, 91 that is associated with the one or more second vehicles 50, 60, 70, 80, 90, respectively, being at or on-route to enter the restricted access construction site 101. This means, for example, that the central network processing unit 10 may be connected or connect to each of the one or more second vehicles 50, 60, 70, 80, 90, and/or from one or more second user devices 51, 61, 71, 81, 91 that is associated with the one or more second vehicles 50, 60, 70, 80, 90, respectively, being at or on-route to enter the restricted access construction site 101, and collect or retrieve measured vehicle characteristic information of each of the one or more second vehicles 50, 60, 70, 80, 90 from each of the one or more second vehicles 50, 60, 70, 80, 90. This may be used to determine and coordinate the utilization of the services and resources 110, 111, 112, 120, 121 within the restricted access construction site 101 for the first vehicle 40, as well as, for each of the one or more second vehicles 50, 60, 70, 80, 90.

In some embodiments, the central network processing unit 10 may obtain driver preference information from the first user device 41 originating from the driver 42 of the first vehicle 40. This means, for example, that the central network processing unit 10 may determine specific requirements or preferences of the driver 42 of the first vehicle 40.

**Action 402.** After obtaining the vehicle characteristic information in Action 401, the central network processing unit 10 determines site-specific management information associated with the restricted access construction site 101 based on the obtained vehicle characteristic information. This means, for example, that the central network processing unit 10 may select site-specific management information indicating which of the services and resources from the services and resources 110, 111, 112, 120, 121 offered within the restricted access construction site 101 that is available to the first user device 41. Since the central network processing unit 10 also may obtain and determine the current or expected utilization of the services and resources 110, 111, 112, 120, 121, the central network processing unit 10 may also suggest when the first user device 41 should utilize the available services and resources 110, 111, 112, 120, 121 offered within the restricted access construction site 101. Also, driving instructions or navigational directions the available services and resources 110, 111, 112, 120, 121 may for example also be included in the site-specific management information. Thus, in some embodiments, the site-specific management information may comprise one or more of: real-time navigational information within the restricted access construction site 101, information indicating available resources 110, 111, 112, 120, 121 within the restricted access construction site 101, real-time scheduling information for use of resources 110, 111, 112, 120, 121 within the restricted access construction site 101, and real-time presence information of one or more second user devices 51, 61, 71, 81, 91 associated with one or more second vehicles 50, 60, 70, 80, 90, respectively, within the restricted access construction site 101.

In case vehicle characteristic information from each of the one or more second vehicles 50, 60, 70, 80, 90, and/or from one or more second user devices 51, 61, 71, 81, 91 that is associated with the one or more second vehicles 50, 60, 70, 80, 90, respectively, was obtained in Action 401, the central network processing unit 10 may also determine the site-specific management information associated with the restricted access construction site 101 based on the obtained vehicle characteristic information from each of the one or more second vehicles 50, 60, 70, 80, 90 and/or from one or more second user devices 51, 61, 71, 81, 91 that is associated with the one or more second vehicles 50, 60, 70, 80, 90, respectively. This means, for example, that the driver 42 of the first vehicle 40 may be presented with information regarding other drivers of other vehicles, such as, e.g. each of the one or more second vehicles 50, 60, 70, 80, 90, that is also on-route, inbound or present within the restricted access construction site 101. This may further help facilitate co-operation and/or social interaction between the drivers of the different vehicles, e.g. obtaining information regarding when/where drivers of other vehicle will be available for lunch or coffee, etc., within the restricted access construction site 101.

In case driver preference information was obtained in Action 401, the central network processing unit 10 may also determine the site-specific management information associated with the restricted access construction site 101 based on the obtained driver preference information. This means, for example, that the site specific management information available to the driver 42 of the first vehicle 40 may be customized to the requirements and/or preferences of the driver 42 of the first vehicle 40.

**Action 403.** After determining the site-specific management information in Action 402, the central network processing unit 10 provides the determined site-specific management information to the first user device 41. This means, for example, that the central network processing unit 10 may provide the selected and determined site-specific management information indicating which of the services and resources from the services and resources 110, 111, 112, 120, 121 offered within the restricted access construction site 101 that is available to the first user device 41.

Examples of embodiments of a computer-implemented method performed by a first user device 41 in associated with a first vehicle 40 for obtaining site-specific management information associated with a restricted access construction site 101, will now be described with reference to the flowchart depicted in **Fig. 5.** Fig. 5 is an illustrated example of actions, steps or operations which may be performed by the first user device 41 described above with reference to Fig. 1. The method may comprise the following actions, steps or operations.

**Action 501.** The first user device 41 determines that the first vehicle 40 is at or on-route to enter the restricted access construction site 101. This may, for example, be performed through manual input provided by the driver 42 via the first user device 41, or be automatically recognized or determined by the first user device 41, e.g. via a work order indicating the next upcoming location for the vehicle 40 in an application operating on the first user device 41. In some embodiments, the first user device 41 may also determine driver preference information of the driver 42 of the first vehicle 40. The driver preference information may, for example, be predetermined or indicated by the driver 42 to the first user device 41 via a user interface of the user device 41 or be automatically recognized or determined by the first user device 41, e.g. via previously executed work orders by the driver 42.

**Action 502.** After the determination in Action 501, the first user device 41 provides vehicle characteristic information associated with the first vehicle 40 to a central network processing unit 10 in a wireless connected network 20. This, means, for example, that the first user device 41 in the first vehicle 40 enables the central network processing unit 10 to provide site-specific management information associated with the restricted access construction site 101 towards which the first vehicle 40 is inbound that is tailored or customized for the first vehicle 40 based on vehicle characteristic information, such as, e.g. arrival time, current work order, energy/fuel level, etc. In some embodiments, the first user device 41 may also provide the determined driver preference information to the central network processing unit 10 in the wireless connected network 20. This, means, for example, that the first user device 41 in the first vehicle 40 further enables the central network processing unit 10 to provide site-specific management information associated with the restricted access construction site 101 towards which the first vehicle 40 is inbound that is tailored or customized for the driver 42 of the first vehicle 40 based on driver preference information of the driver 42, such as, e.g. information indicating that the driver 42 is interested in a coffee/lunch/dinner, information indicating that the driver 42 is interested in meeting up with colleagues located within the restricted access construction site 101, etc.

**Action 503.** In response to providing the information in Action 502, the first user device 41 may obtain site-specific management information associated with the restricted access construction site 101 based on the provided vehicle characteristic information. This means, for example, that the first user device 41 in the first vehicle 40 may retrieve or receive site-specific management information associated with the restricted access construction site 101 towards which the first vehicle 40 is inbound from the central network processing unit 10 that is tailored or customized for the first vehicle 40 based on vehicle characteristic information. In some embodiments, the first user device 41 may also obtain site-specific management information associated with the restricted access construction site 101 based on the provided driver preference information. This means, for example, that the first user device 41 in the first vehicle 40 may retrieve or receive site-specific management information associated with the restricted access construction site 101 towards which the first vehicle 40 is inbound from the central network processing unit 10 that is tailored or customized for the driver 42 of the first vehicle 40 based on driver preference information of the driver 42.

**Action 504.** In response to obtaining the information in Action 503, the first user device 41 may display the obtained site-specific management information associated with the restricted access construction site 101 on the first user device 41. This means, for example, that the first user device 41 in the first vehicle 40 may display site-specific management information associated with the restricted access construction site 101 towards which the first vehicle 40 is inbound from the central network processing unit 10 that is tailored or customized for the driver 42 of the first vehicle 40 to the driver 42 while at or on-route to the restricted access construction site 101. This may, for example, be performed on via the touch-sensitive screen 41' on which the GUI of an application operating on the first user device 41 is displayed to the driver 42 of the vehicle 40.

To perform the method for providing site-specific management information associated with a restricted access construction site 101 to a first user device 41 in a wireless communications network 20, wherein the first user device 41 is associated with a first vehicle 40 being at or on-route to enter the restricted access construction site 101, the central network processing unit 10 may comprise the arrangement depicted in Fig 6. Fig 6 shows a schematic block diagram of embodiments of the central network processing unit 10. It should also be noted that, although not shown in Fig. 5, known conventional features of a central network processing unit 10, such as, for example, a power source (e.g. a battery or main connection), and input/output ports for data communication and connection towards the Internet and wireless communications network 20, may be comprised in the central network processing unit 10.

The central network processing unit 10 may comprise processing circuitry 610 and a memory 620. It be noted that some or all of the functionality described in the embodiments above as being performed by the central network processing unit 10 may be provided by the processing circuitry 610 executing instructions stored on a computer-readable medium, such as, the memory 620 shown in Fig. 6. Alternative embodiments of the central network processing unit 10 may comprise additional components, such as, for example, an obtaining module 611, a determining module 612, and a providing module 613 responsible for providing its functionality to support the embodiments described herein.

The central network processing unit 10 or processing circuitry 610 is configured to, or may comprise the obtaining module 611 configured to, obtain vehicle characteristic information from the first vehicle 40 and/or the first user device 41. Also, the central network processing unit 10 or processing circuitry 610 is configured to, or may comprise the determining module 612 configured to, determine site-specific management information associated with the restricted access construction site 101 based on the obtained vehicle characteristic information. Further, the central network processing unit 10 or processing circuitry 610 is configured to, or may comprise the providing module 613 configured to, provide the site-specific management information to the first user device 41.

In some embodiments, the site-specific management information comprise one or more of: real-time navigational information within the restricted access construction site 101, information indicating available resources 110, 111, 112, 120, 121 within the restricted access construction site 101, real-time scheduling information for use of resources 110, 111, 112, 120, 121 within the restricted access construction site 101, and real-time presence information of one or more second user devices 51, 61, 71, 81, 91 associated with one or more second vehicles 50, 60, 70, 80, 90, respectively, within the restricted access construction site 101. In some embodiments, the vehicle characteristic information comprise one or more of: a location of the first vehicle 40, a fuel/energy level of the first vehicle 40, and information indicating scheduled operations to be performed by the first vehicle 40 within the restricted access construction site 101.

In some embodiments, the central network processing unit 10 or processing circuitry 610 may be configured to, or may comprise the obtaining module 611 configured to, obtain vehicle characteristic information from each of the one or more second vehicles 50, 60, 70, 80, 90, and/or from one or more second user devices 51, 61, 71, 81, 91 that is associated with the one or more second vehicles 50, 60, 70, 80, 90, respectively, being at or on-route to enter the restricted access construction site 101. In this case, according to some embodiments, the central network processing unit 10 or processing circuitry 610 may be configured to, or may comprise the determining module 611 configured to, determine the site-specific management information associated with the restricted access construction site 101 based on the obtained vehicle characteristic information from each of the one or more second vehicles 50, 60, 70, 80, 90 and/or from one or more second user devices 51, 61, 71, 81, 91 that is associated with the one or more second vehicles 50, 60, 70, 80, 90, respectively.

In some embodiments, the central network processing unit 10 or processing circuitry 610 may be configured to, or may comprise the obtaining module 611 configured to, obtain driver preference information from the first user device 41 originating from the driver 42 of the first vehicle 40. In this case, according to some embodiments, the central network processing unit 10 or processing circuitry 610 may be configured to, or may comprise the determining module 611 configured to, determine the site-specific management information associated with the restricted access construction site 101 based on the obtained driver preference information.

Furthermore, the embodiments providing site-specific management information associated with a restricted access construction site 101 to a first user device 41 in a wireless communications network 20, described above may be at least partly implemented through one or more processors, such as, the processing circuitry 610 in the central network processing unit 10 depicted in Fig. 6, together with computer program code for performing the functions and actions of the embodiments herein. The program code mentioned above may also be provided as a computer program product, for instance in the form of a data carrier carrying computer program code or code means for performing the embodiments herein when being loaded into the processing circuitry 610 in the central network processing unit 10. The data carrier, or computer readable medium, may be one of an electronic signal, optical signal, radio signal or computer-readable storage medium. The computer program code may e.g. be provided as pure program code in the central network processing unit 10 or on a server and downloaded to the central network processing unit 10. Thus, it should be noted that the central network processing unit 10 may in some embodiments be implemented as computer programs stored in memory 620 in Fig. 6, e.g. the computer readable storage unit/module, for execution by processors or processing modules, e.g. the processing circuitry 610 in the central network processing unit 10 in Fig. 6. By way of example, such computer readable medium or machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable or computer readable medium. Thus, any such connection is properly termed a machine-readable or computer readable medium. Combinations of the above are also included within the scope of machine-readable or computer readable media. Machine or computer executable instructions may comprise, for example, instructions and data that cause a general-purpose computer, special purpose computer, or special purpose processing machines to perform a certain function or group of functions.

Those skilled in the art will also appreciate that the processing circuitry 610 and the memory 620 described above may refer to a combination of analog and digital circuits, and/or one or more processors configured with software and/or firmware, e.g. stored in a computer readable storage unit/module, that when executed by the one or more processors such as the processing circuitry 610 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

For reference, it should also be noted that the central network processing unit 10 may, for example, be manifested as a general-purpose processor, an application specific processor, a circuit containing processing components, a group of distributed processing components, a group of distributed computers configured for processing, a field programmable gate array (FPGA), etc. The processor may be or include any number of hardware components for conducting data or signal processing or for executing computer code stored in memory. The memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

To perform the method actions for obtaining site-specific management information associated with a restricted access construction site 101, the first user device 41 associated with a first vehicle 40 may comprise the arrangement depicted in Fig 7. Fig 7 shows a schematic block diagram of embodiments of the first user device 41 associated with a first vehicle 40. It should also be noted that, although not shown in Fig. 7, known conventional features of an first user device 41 associated with a first vehicle 40, such as, for example, a power source, e.g. a battery or connection to an power source in the first vehicle 40, may be comprised in the first user device 41.

The first user device 41 may comprise processing circuitry 710 and a memory 720. It should also be noted that some or all of the functionality described in the embodiments above as being performed by the first user device 41 may be provided by the processing circuitry 710 executing instructions stored on a computer-readable medium, such as, the memory 720 shown in Fig. 7. Alternative embodiments of the first user device 41 may comprise additional components, such as, for example, a determining module 711, a providing module 712, an obtaining module 713, and a displaying module 714, each responsible for providing its functionality to support the embodiments described herein.

The first user device 41 or processing circuitry 710 is configured to, or may comprise the determining module 711 configured to, determine that the first vehicle 40 is at or on-route to enter the restricted access construction site 101. Also, first user device 41 or processing circuitry 710 is configured to, or may comprise the providing module 712 configured to, provide vehicle characteristic information associated with the first vehicle 40 to a central network processing unit 10 in a wireless connected network 20. Further, the first user device 41 or processing circuitry 710 is configured to, or may comprise the obtaining module 713 configured to, obtain site-specific management information associated with the restricted access construction site 101 based on the provided vehicle characteristic information. Furthermore, the first user device 41 or processing circuitry 710 is configured to, or may comprise the displaying module 714 configured to, display the obtained site-specific management information associated with the restricted access construction site 101 on the first user device 41.

In some embodiments, the first user device 41 or processing circuitry 710 may be configured to, or may comprise the determining module 711 configured to, determine driver preference information via a user interface of the user device 41 from the driver 42 of the first vehicle 40. In this case, according to some embodiments, the first user device 41 or processing circuitry 710 may be configured to, or may comprise the providing module 712 configured to, provide the determined driver preference information to the central network processing unit 10 in the wireless connected network 20. Here, in some embodiments, the first user device 41 or processing circuitry 710 may be configured to, or may comprise the obtaining module 713 configured to, obtain site-specific management information associated with the restricted access construction site 101 based on the provided driver preference information.

Furthermore, in some embodiments, the first user device 41 may be a stand-alone wireless communications device, or a wireless communications device integrated with the first vehicle 40, arranged to operate within a wireless telecommunications network.

Furthermore, the embodiments obtaining site-specific management information associated with a restricted access construction site 101, described above may be at least partly implemented through one or more processors, such as, the processing circuitry 710 in the first user device 41 depicted in Fig. 7, together with computer program code for performing the functions and actions of the embodiments herein. The program code mentioned above may also be provided as a computer program product, for instance in the form of a data carrier carrying computer program code or code means for performing the embodiments herein when being loaded into the processing circuitry 710 in the first user device 41. The data carrier, or computer readable medium, may be one of an electronic signal, optical signal, radio signal or computer-readable storage medium. The computer program code may e.g. be provided as pure program code in the first user device 41 or on a server and downloaded to the first user device 41. Thus, it should be noted that the first user device 41 may in some embodiments be implemented as computer programs stored in memory 720 in Fig. 7, e.g. the computer readable storage unit/module, for execution by processors or processing modules, e.g. the processing circuitry 710 in the first user device 41 in Fig. 7. By way of example, such computer readable medium or machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable or computer readable medium. Thus, any such connection is properly termed a machine-readable or computer readable medium. Combinations of the above are also included within the scope of machine-readable or computer readable media. Machine or computer executable instructions may comprise, for example, instructions and data that cause a general-purpose computer, special purpose computer, or special purpose processing machines to perform a certain function or group of functions.

Those skilled in the art will also appreciate that the processing circuitry 710 and the memory 720 described above may refer to a combination of analog and digital circuits, and/or one or more processors configured with software and/or firmware, e.g. stored in a computer readable storage unit/module, that when executed by the one or more processors such as the processing circuitry 710 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

For reference, it should also be noted that the first user device 41 may, for example, be manifested as a general-purpose processor, an application specific processor, a circuit containing processing components, a group of distributed processing components, a group of distributed computers configured for processing, a field programmable gate array (FPGA), etc. The processor may be or include any number of hardware components for conducting data or signal processing or for executing computer code stored in memory. The memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatuses, modules, systems, and computer program products. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

It should also be noted that the various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes. The embodiments herein are not limited to the above described preferred embodiments. Various alternatives, modifications and equivalents may be used. Therefore, the above embodiments should not be construed as limiting. The scope of protection of the invention is defined by the appended claims.

## Claims

1. A computer-implemented method performed by a central network processing unit (10) for providing site-specific management information associated with a restricted access construction site (101) to a first user device (41) in a wireless communications network (20), wherein the first user device (41) is associated with a first vehicle (40) being at or on-route to enter the restricted access construction site (101), the method comprising:
*obtaining* (401) vehicle characteristic information from the first user device (41), wherein the vehicle characteristic information comprises information indicating scheduled operations to be performed by the first vehicle (40) within the restricted access construction site (101);
*determining* (402) site-specific management information associated with the restricted access construction site (101) based on the obtained vehicle characteristic information, wherein the information indicating scheduled operations to be performed by the first vehicle (40) within the restricted access construction site (101), via a work order, is used by the central network processing unit (10) to determine which of the services and resources (110, 111, 112, 120, 121) within the restricted access construction site (101) that the first vehicle (40) may be interested in utilizing; and
*providing* (403) the determined site-specific management information to the first user device (41),
wherein the site-specific management information comprises information indicating available resources (110-113; 120-121) within the restricted access construction site (101) and real-time scheduling information for use of resources (110-113; 120-121) within the restricted access construction site (101).

2. The method according to claim 1, wherein the site-specific management information further comprises one or more of:
- real-time navigational information within the restricted access construction site (101), and
- real-time presence information of one or more second user devices (51, 61, 71, 81, 91) associated with one or more second vehicles (50, 60, 70, 80, 90), respectively, within the restricted access construction site (101).

3. The method according to claim 1 or 2, wherein the vehicle characteristic information further comprises one or more of:
- a location of the first vehicle (40), and
- a fuel/energy level of the first vehicle (40).

4. The method according to any of claims 1-3, wherein the *obtaining* (401) further comprises obtaining vehicle characteristic information from each of one or more second vehicles (50, 60, 70, 80, 90), and/or from one or more second user devices (51, 61, 71, 81, 91) that is associated with the one or more second vehicles (50, 60, 70, 80, 90), respectively, being at or on-route to enter the restricted access construction site (101), and wherein the *determining (403)* further comprises determining the site-specific management information associated with the restricted access construction site (101) based on the obtained vehicle characteristic information from each of the one or more second vehicles (50, 60, 70, 80, 90) and/or from one or more second user devices (51, 61, 71, 81, 91) that is associated with the one or more second vehicles (50, 60, 70, 80, 90), respectively.

5. The method according to any of claims 1-4, wherein the *obtaining* (401) further comprises obtaining driver preference information from the first user device (41) originating from the driver (42) of the first vehicle (40), and wherein the *determining* (402) further comprises determining the site-specific management information associated with the restricted access construction site (101) based on the obtained driver preference information.

6. A central network processing unit (10) for providing site-specific management information associated with a restricted access construction site (101) to a first user device (41) in a wireless communications network (20), wherein the first user device (41) is associated with a first vehicle (40) being at or on-route to enter the restricted access construction site (101), the central network processing unit (10) comprise processing circuitry (610) and a memory (620), wherein the processing circuitry (610) is configured to obtain vehicle characteristic information from the first user device (41), wherein the vehicle characteristic information comprises information indicating scheduled operations to be performed by the first vehicle (40) within the restricted access construction site (101), determine site-specific management information associated with the restricted access construction site (101) based on the obtained vehicle characteristic information, wherein the information indicating scheduled operations to be performed by the first vehicle (40) within the restricted access construction site (101), via a work order, is useable by the central network processing unit (10) to determine which of the services and resources (110, 111, 112, 120, 121) within the restricted access construction site (101) that the first vehicle (40) may be interested in utilizing, and provide the site-specific management information to the first user device (41), wherein the site-specific management information comprises information indicating available resources (110, 111, 112, 120, 121) within the restricted access construction site (101) and real-time scheduling information for use of resources (110, 111, 112, 120, 121) within the restricted access construction site (101).

7. The central network processing unit (10) according to claim 6, wherein the site-specific management information further comprises one or more of:
- real-time navigational information within the restricted access construction site (101), and
- real-time presence information of one or more second user devices (51, 61, 71, 81, 91) associated with one or more second vehicles (50, 60, 70, 80, 90), respectively, within the restricted access construction site (101).

8. The central network processing unit (10) according to claim 6 or 7, wherein the vehicle characteristic information further comprises one or more of:
- a location of the first vehicle (40), and
- a fuel/energy level of the first vehicle (40).

9. The central network processing unit (10) according to any of claims 6-8, wherein the processing circuitry (610) is further configured to obtain vehicle characteristic information from each of one or more second vehicles (50, 60, 70, 80, 90), and/or from one or more second user devices (51, 61, 71, 81, 91) that is associated with the one or more second vehicles (50, 60, 70, 80, 90), respectively, being at or on-route to enter the restricted access construction site (101), and determine the site-specific management information associated with the restricted access construction site (101) based on the obtained vehicle characteristic information from each of the one or more second vehicles (50, 60, 70, 80, 90) and/or from one or more second user devices (51, 61, 71, 81, 91) that is associated with the one or more second vehicles (50, 60, 70, 80, 90), respectively.

10. The central network processing unit (10) according to any of claims 6-9, wherein the processing circuitry (610) is further configured to obtain driver preference information from the first user device (41) originating from the driver (42) of the first vehicle (40), and determine the site-specific management information associated with the restricted access construction site (101) based on the obtained driver preference information.

11. A computer-implemented method performed by a first user device (41) associated with a first vehicle (40) for obtaining site-specific management information associated with a restricted access construction site (101), the method comprising:
*determining* (501) that the first vehicle (40) is at or on-route to enter the restricted access construction site (101) as automatically recognized by the first user device (41) via a work order indicating a next upcoming location for the first vehicle (40) in an application operating on the first user device (41);
*providing* (502) vehicle characteristic information associated with the first vehicle (40) to a central network processing unit (10) in a wireless communications network (20), wherein the vehicle characteristic information comprises information indicating scheduled operations to be performed by the first vehicle (40) within the restricted access construction site (101), and wherein the information indicating scheduled operations to be performed by the first vehicle (40) within the restricted access construction site (101), via the work order, is usable by the central network processing unit (10) to determine which of the services and resources (110, 111, 112, 120, 121) within the restricted access construction site (101) that the first vehicle (40) may be interested in utilizing;
*obtaining* (503), from the central network processing unit (10), site-specific management information associated with the restricted access construction site (101) based on the provided vehicle characteristic information; and
*displaying* (504) the obtained site-specific management information associated with the restricted access construction site (101) on the first user device (41),
wherein the site-specific management information comprises information indicating available resources (110, 111, 112, 120, 121) within the restricted access construction site (101) and real-time scheduling information for use of resources (110, 111, 112, 120, 121) within the restricted access construction site (101).

12. The method according to claim 11, wherein the *determining* (501) further comprises determining driver preference information via a user interface of the first user device (41) from the driver (42) of the first vehicle (40), the *providing* (502) further comprises providing the determined driver preference information to the central network processing unit (10) in the wireless connected network (20), and the *obtaining* (503) further comprises obtaining site-specific management information associated with the restricted access construction site (101) based on the provided driver preference information.

13. A first user device (41) associated with a first vehicle (40) for obtaining site-specific management information associated with a restricted access construction site (101), wherein the first user device (41) comprise processing circuitry (710) and a memory (720), wherein the processing circuitry (710) is configured to
determine that the first vehicle (40) is at or on-route to enter the restricted access construction site (101) as automatically recognized by the first user device (41) via a work order indicating a next upcoming location for the first vehicle (40) in an application operating on the first user device (41), provide vehicle characteristic information associated with the first vehicle (40) to a central network processing unit (10) in a wireless communications network (20), wherein the vehicle characteristic information comprises information indicating scheduled operations to be performed by the first vehicle (40) within the restricted access construction site (101), and wherein the information indicating scheduled operations to be performed by the first vehicle (40) within the restricted access construction site (101), via the work order, is usable by the central network processing unit (10) to determine which of the services and resources (110, 111, 112, 120, 121) within the restricted access construction site (101) that the first vehicle (40) may be interested in utilizing, obtain from the central network processing unit (10) site-specific management information associated with the restricted access construction site (101) based on the provided vehicle characteristic information, and display the obtained site-specific management information associated with the restricted access construction site (101) on the first user device (41), wherein the site-specific management information comprises information indicating available resources (110, 111, 112, 120, 121) within the restricted access construction site (101) and real-time scheduling information for use of resources (110, 111, 112, 120, 121) within the restricted access construction site (101).

14. The first user device (41) according to claim 13, wherein the processing circuitry (710) is further configured to determine driver preference information via a user interface of the first user device (41) from the driver (42) of the first vehicle (40), provide the determined driver preference information to the central network processing unit (10) in the wireless connected network (20), and obtain site-specific management information associated with the restricted access construction site (101) based on the provided driver preference information.

15. The first user device (41) according to claim 13 or 14, wherein the first user device (41) is a stand-alone wireless communications device, or a wireless communications device integrated with the first vehicle (40), arranged to operate within a wireless telecommunications network.

16. A computer program product comprising program code means for performing the steps of any of claims 1-5 or 11-12 when said program is executed on a processing circuitry (610; 710) of a central processing unit (10) or a first user device (41).

17. A computer program carrier carrying a computer program according to claim 16, wherein the computer program carrier is one of an electronic signal, optical signal, radio signal or computer-readable storage medium.

## Patentansprüche

1. Computerimplementiertes Verfahren, das durch eine zentrale Netzwerkverarbeitungseinheit (10) durchgeführt wird, zum Bereitstellen baustellenspezifischer Verwaltungsinformationen, die einer Baustelle mit beschränktem Zugang (101) zugeordnet sind, an eine erste Benutzervorrichtung (41) in einem drahtlosen Kommunikationsnetzwerk (20), wobei die erste Benutzervorrichtung (41) einem ersten Fahrzeug (40) zugeordnet ist, das an der Baustelle mit beschränktem Zugang (101) oder unterwegs ist, um in diese hineinzufahren, wobei das Verfahren Folgendes umfasst:
Erlangen (401) von Fahrzeugeigenschaftsinformationen von der ersten Benutzervorrichtung (41), wobei die Fahrzeugeigenschaftsinformationen Informationen umfassen, die geplante Vorgänge angeben, die durch das erste Fahrzeug (40) innerhalb der Baustelle mit beschränktem Zugang (101) durchzuführen sind;
Bestimmen (402) baustellenspezifischer Verwaltungsinformationen, die der Baustelle mit beschränktem Zugang (101) zugeordnet sind, basierend auf den erlangten Fahrzeugeigenschaftsinformationen, wobei die Informationen, die geplante Vorgänge angeben, die durch das erste Fahrzeug (40) innerhalb der Baustelle mit beschränktem Zugang (101) durchzuführen sind, über einen Arbeitsbefehl durch die zentrale Netzwerkverarbeitungseinheit (10) dazu verwendet werden, zu bestimmen, an einer Verwendung welcher der Dienste und Ressourcen (110, 111, 112, 120, 121) innerhalb der Baustelle mit beschränktem Zugang (101) das erste Fahrzeug (40) interessiert sein kann; und
Bereitstellen (403) der bestimmten baustellenspezifischen Verwaltungsinformationen an die erste Benutzervorrichtung (41),
wobei die baustellenspezifischen Verwaltungsinformationen Informationen, die verfügbare Ressourcen (110-113; 120-121) innerhalb der Baustelle mit beschränktem Zugang (101) angeben, und Echtzeitplanungsinformationen zur Verwendung von Ressourcen (110-113; 120-121) innerhalb der Baustelle mit beschränktem Zugang (101) umfassen.

2. Verfahren nach Anspruch 1, wobei die baustellenspezifischen Verwaltungsinformationen ferner eines oder mehrere von Folgendem umfassen:
- Echtzeitnavigationsinformationen innerhalb der Baustelle mit beschränktem Zugang (101) und
- Echtzeitanwesenheitsinformationen einer oder mehrerer zweiter Benutzervorrichtungen (51, 61, 71, 81, 91), die jeweils einem oder mehreren zweiten Fahrzeugen (50, 60, 70, 80, 90) innerhalb der Baustelle mit beschränktem Zugang (101) zugeordnet sind.

3. Verfahren nach Anspruch 1 oder 2, wobei die Fahrzeugeigenschaftsinformationen ferner einen oder mehrere von Folgendem umfassen:
- einem Ort des ersten Fahrzeugs (40) und
- einem Kraftstoff-/Energiepegel des ersten Fahrzeugs (40).

4. Verfahren nach einem der Ansprüche 1-3, wobei das Erlangen (401) ferner Erlangen von Fahrzeugeigenschaftsinformationen von jedem eines oder mehrerer zweiter Fahrzeuge (50, 60, 70, 80, 90) und/oder von einer oder mehreren zweiten Benutzervorrichtungen (51, 61, 71, 81, 91), die jeweils dem einen oder den mehreren zweiten Fahrzeugen (50, 60, 70, 80, 90) zugeordnet sind, die an der Baustelle mit beschränktem Zugang (101) oder unterwegs sind, um in diese hineinzufahren, umfasst und wobei das Bestimmen (403) ferner Bestimmen der baustellenspezifischen Verwaltungsinformationen, die der Baustelle mit beschränktem Zugang (101) zugeordnet sind, basierend auf den erlangten Fahrzeugeigenschaftsinformationen von jedem des einen oder der mehreren zweiten Fahrzeuge (50, 60, 70, 80, 90) und/oder von einer oder mehreren zweiten Benutzervorrichtungen (51, 61, 71, 81, 91), die jeweils dem einen oder den mehreren zweiten Fahrzeugen (50, 60, 70, 80, 90) zugeordnet sind, umfasst.

5. Verfahren nach einem der Ansprüche 1-4, wobei das Erlangen (401) ferner Erlangen von Fahrerpräferenzinformationen von der ersten Benutzervorrichtung (41), die dem Fahrer (42) des ersten Fahrzeugs (40) entstammen, umfasst und wobei das Bestimmen (402) ferner Bestimmen der baustellenspezifischen Verwaltungsinformationen, die der Baustelle mit beschränktem Zugang (101) zugeordnet sind, basierend auf den erlangten Fahrerpräferenzinformationen umfasst.

6. Zentrale Netzwerkverarbeitungseinheit (10) zum Bereitstellen baustellenspezifischer Verwaltungsinformationen, die einer Baustelle mit beschränktem Zugang (101) zugeordnet sind, an eine erste Benutzervorrichtung (41) in einem drahtlosen Kommunikationsnetzwerk (20), wobei die erste Benutzervorrichtung (41) einem ersten Fahrzeug (40) zugeordnet ist, das an der Baustelle mit beschränktem Zugang (101) oder unterwegs ist, um in diese hineinzufahren, wobei die zentrale Netzwerkverarbeitungseinheit (10) eine Verarbeitungsschaltung (610) und einen Speicher (620) umfasst, wobei die Verarbeitungsschaltung (610) zu Folgendem konfiguriert ist:
Erlangen von Fahrzeugeigenschaftsinformationen von der ersten Benutzervorrichtung (41), wobei die Fahrzeugeigenschaftsinformationen Informationen umfassen, die geplante Vorgänge angeben, die durch das erste Fahrzeug (40) innerhalb der Baustelle mit beschränktem Zugang (101) durchzuführen sind, Bestimmen baustellenspezifischer Verwaltungsinformationen, die der Baustelle mit beschränktem Zugang (101) zugeordnet sind, basierend auf den erlangten Fahrzeugeigenschaftsinformationen, wobei die Informationen, die geplante Vorgänge angeben, die durch das erste Fahrzeug (40) innerhalb der Baustelle mit beschränktem Zugang (101) durchzuführen sind, über einen Arbeitsbefehl durch die zentrale Netzwerkverarbeitungseinheit (10) dazu verwendbar sind, zu bestimmen, an einer Verwendung welcher der Dienste und Ressourcen (110, 111, 112, 120, 121) innerhalb der Baustelle mit beschränktem Zugang (101) das erste Fahrzeug (40) interessiert sein kann, und Bereitstellen der baustellenspezifischen Verwaltungsinformationen an die erste Benutzervorrichtung (41), wobei baustellenspezifische Verwaltungsinformationen Informationen, die verfügbare Ressourcen (110, 111, 112, 120, 121) innerhalb der Baustelle mit beschränktem Zugang (101) angeben, und Echtzeitplanungsinformationen zur Verwendung von Ressourcen (110, 111, 112, 120, 121) innerhalb der Baustelle mit beschränktem Zugang (101) umfassen.

7. Zentrale Netzwerkverarbeitungseinheit (10) nach Anspruch 6, wobei die baustellenspezifischen Verwaltungsinformationen ferner eines oder mehrere von Folgendem umfassen:
- Echtzeitnavigationsinformationen innerhalb der Baustelle mit beschränktem Zugang (101) und
- Echtzeitanwesenheitsinformationen einer oder mehrerer zweiter Benutzervorrichtungen (51, 61, 71, 81, 91), die jeweils einem oder mehreren zweiten Fahrzeugen (50, 60, 70, 80, 90) innerhalb der Baustelle mit beschränktem Zugang (101) zugeordnet sind.

8. Zentrale Netzwerkverarbeitungseinheit (10) nach Anspruch 6 oder 7, wobei die Fahrzeugeigenschaftsinformationen ferner einen oder mehrere von Folgendem umfassen:
- einem Ort des ersten Fahrzeugs (40) und
- einem Kraftstoff-/Energiepegel des ersten Fahrzeugs (40).

9. Zentrale Netzwerkverarbeitungseinheit (10) nach einem der Ansprüche 6-8, wobei die Verarbeitungsschaltung (610) ferner dazu konfiguriert ist, Fahrzeugeigenschaftsinformationen von jedem eines oder mehrerer zweiter Fahrzeuge (50, 60, 70, 80, 90) und/oder von einer oder mehreren zweiten Benutzervorrichtungen (51, 61, 71, 81, 91) zu erlangen, die jeweils dem einen oder den mehreren zweiten Fahrzeugen (50, 60, 70, 80, 90) zugeordnet sind, die an der Baustelle mit beschränktem Zugang (101) oder unterwegs sind, um in diese hineinzufahren, und die baustellenspezifischen Verwaltungsinformationen, die der Baustelle mit beschränktem Zugang (101) zugeordnet sind, basierend auf den erlangten Fahrzeugeigenschaftsinformationen von jedem des einen oder der mehreren zweiten Fahrzeuge (50, 60, 70, 80, 90) und/oder von einer oder mehreren zweiten Benutzervorrichtungen (51, 61, 71, 81, 91), die jeweils dem einen oder den mehreren zweiten Fahrzeugen (50, 60, 70, 80, 90) zugeordnet sind, zu bestimmen.

10. Zentrale Netzwerkverarbeitungseinheit (10) nach einem der Ansprüche 6-9, wobei die Verarbeitungsschaltung (610) ferner dazu konfiguriert ist, Fahrerpräferenzinformationen von der ersten Benutzervorrichtung (41), die dem Fahrer (42) des ersten Fahrzeugs (40) entstammen, zu erlangen und die baustellenspezifischen Verwaltungsinformationen, die der Baustelle mit beschränktem Zugang (101) zugeordnet sind, basierend auf den erlangten Fahrerpräferenzinformationen zu bestimmen.

11. Computerimplementiertes Verfahren, das durch eine erste Benutzervorrichtung (41), die einem ersten Fahrzeug (40) zugeordnet ist, durchgeführt wird, zum Erlangen baustellenspezifischer Verwaltungsinformationen, die einer Baustelle mit beschränktem Zugang (101) zugeordnet sind, wobei das Verfahren Folgendes umfasst:
Bestimmen (501), dass das erste Fahrzeug (40) an der Baustelle mit beschränktem Zugang (101) oder unterwegs ist, um in diese hineinzufahren, wie durch die erste Benutzervorrichtung (41) automatisch über einen Arbeitsbefehl erkannt, der einen nächsten bevorstehenden Ort für das erste Fahrzeug (40) in einer Anwendung, die auf der ersten Benutzervorrichtung (41) läuft, angibt;
Bereitstellen (502) von Fahrzeugeigenschaftsinformationen, die dem ersten Fahrzeug (40) zugeordnet sind, an eine zentrale Netzwerkverarbeitungseinheit (10) in einem drahtlosen Kommunikationsnetzwerk (20), wobei die Fahrzeugeigenschaftsinformationen Informationen, die geplante Vorgänge angeben, die durch das erste Fahrzeug (40) innerhalb der Baustelle mit beschränktem Zugang (101) durchzuführen sind, umfassen und wobei die Informationen, die geplante Vorgänge angeben, die durch das erste Fahrzeug (40) innerhalb der Baustelle mit beschränktem Zugang (101) durchzuführen sind, über den Arbeitsbefehl durch die zentrale Netzwerkverarbeitungseinheit (10) dazu verwendbar sind, zu bestimmen, an einer Verwendung welcher der Dienste und Ressourcen (110, 111, 112, 120, 121) innerhalb der Baustelle mit beschränktem Zugang (101) das erste Fahrzeug (40) interessiert sein kann;
Erlangen (503), von der zentralen Netzwerkverarbeitungseinheit (10), baustellenspezifischer Verwaltungsinformationen, die der Baustelle mit beschränktem Zugang (101) zugeordnet sind, basierend auf den bereitgestellten Fahrzeugeigenschaftsinformationen; und
Anzeigen (504) der erlangten baustellenspezifischen Verwaltungsinformationen, die der Baustelle mit beschränktem Zugang (101) zugeordnet sind, auf der ersten Benutzervorrichtung (41),
wobei die baustellenspezifischen Verwaltungsinformationen Informationen, die verfügbare Ressourcen (110, 111, 112, 120, 121) innerhalb der Baustelle mit beschränktem Zugang (101) angeben, und Echtzeitplanungsinformationen zur Verwendung von Ressourcen (110, 111, 112, 120, 121) innerhalb der Baustelle mit beschränktem Zugang (101) umfassen.

12. Verfahren nach Anspruch 11, wobei das Bestimmen (501) ferner Bestimmen von Fahrerpräferenzinformationen über eine Benutzerschnittstelle der ersten Benutzervorrichtung (41) von dem Fahrer (42) des ersten Fahrzeugs (40) umfasst, das Bereitstellen (502) ferner Bereitstellen der bestimmten Fahrerpräferenzinformationen an die zentrale Netzwerkverarbeitungseinheit (10) in dem drahtlosen verbundenen Netzwerk (20) umfasst und das Erlangen (503) ferner Erlangen baustellenspezifischer Verwaltungsinformationen, die der Baustelle mit beschränktem Zugang (101) zugeordnet sind, basierend auf den bereitgestellten Fahrerpräferenzinformationen umfasst.

13. Erste Benutzervorrichtung (41), die einem ersten Fahrzeug (40) zugeordnet ist, zum Erlangen baustellenspezifischer Verwaltungsinformationen, die einer Baustelle mit beschränktem Zugang (101) zugeordnet sind, wobei die erste Benutzervorrichtung (41) eine Verarbeitungsschaltung (710) und einen Speicher (720) umfasst, wobei die Verarbeitungsschaltung (710) zu Folgendem konfiguriert ist:
Bestimmen, dass das erste Fahrzeug (40) an der Baustelle mit beschränktem Zugang (101) oder unterwegs ist, um in diese hineinzufahren, wie durch die erste Benutzervorrichtung (41) automatisch über einen Arbeitsbefehl erkannt, der einen nächsten bevorstehenden Ort für das erste Fahrzeug (40) in einer Anwendung, die auf der ersten Benutzervorrichtung (41) läuft, angibt, Bereitstellen von Fahrzeugeigenschaftsinformationen, die dem ersten Fahrzeug (40) zugeordnet sind, an eine zentrale Netzwerkverarbeitungseinheit (10) in einem drahtlosen Kommunikationsnetzwerk (20), wobei die Fahrzeugeigenschaftsinformationen Informationen umfassen, die geplante Vorgänge angeben, die durch das erste Fahrzeug (40) innerhalb der Baustelle mit beschränktem Zugang (101) durchzuführen sind, und wobei die Informationen, die geplante Vorgänge angeben, die durch das erste Fahrzeug (40) innerhalb der Baustelle mit beschränktem Zugang (101) durchzuführen sind, über den Arbeitsbefehl durch die zentrale Netzwerkverarbeitungseinheit (10) dazu verwendbar sind, zu bestimmen, an einer Verwendung welcher der Dienste und Ressourcen (110, 111, 112, 120, 121) innerhalb der Baustelle mit beschränktem Zugang (101) das erste Fahrzeug (40) interessiert sein kann, Erlangen, von der zentralen Netzwerkverarbeitungseinheit (10), baustellenspezifischer Verwaltungsinformationen, die der Baustelle mit beschränktem Zugang (101) zugeordnet sind, basierend auf den bereitgestellten Fahrzeugeigenschaftsinformationen, und Anzeigen der erlangten baustellenspezifischen Verwaltungsinformationen, die der Baustelle mit beschränktem Zugang (101) zugeordnet sind, auf der ersten Benutzervorrichtung (41), wobei die baustellenspezifischen Verwaltungsinformationen Informationen, die verfügbare Ressourcen (110, 111, 112, 120, 121) innerhalb der Baustelle mit beschränktem Zugang (101) angeben, und Echtzeitplanungsinformationen zur Verwendung von Ressourcen (110, 111, 112, 120, 121) innerhalb der Baustelle mit beschränktem Zugang (101) umfassen.

14. Erste Benutzervorrichtung (41) nach Anspruch 13, wobei die Verarbeitungsschaltung (710) ferner dazu konfiguriert ist, Fahrerpräferenzinformationen über eine Benutzerschnittstelle der ersten Benutzervorrichtung (41) von dem Fahrer (42) des ersten Fahrzeugs (40) zu bestimmen, die bestimmten Fahrerpräferenzinformationen an die zentrale Netzwerkverarbeitungseinheit (10) in dem drahtlosen verbundenen Netzwerk (20) bereitzustellen und baustellenspezifische Verwaltungsinformationen, die der Baustelle mit beschränktem Zugang (101) zugeordnet sind, basierend auf den bereitgestellten Fahrerpräferenzinformationen zu erlangen.

15. Erste Benutzervorrichtung (41) nach Anspruch 13 oder 14, wobei die erste Benutzervorrichtung (41) eine selbständige drahtlose Kommunikationsvorrichtung oder eine drahtlose Kommunikationsvorrichtung ist, die in dem ersten Fahrzeug (40) integriert und dazu angeordnet ist, innerhalb eines drahtlosen Telekommunikationsnetzwerks zu laufen.

16. Computerprogrammprodukt, umfassend Programmcodemittel zum Durchführen der Schritte nach einem der Ansprüche 1-5 oder 11-12, wenn das Programm auf einer Verarbeitungsschaltung (610; 710) einer zentralen Verarbeitungseinheit (10) oder einer ersten Benutzervorrichtung (41) ausgeführt wird.

17. Computerprogrammträger, der ein Computerprogramm nach Anspruch 16 trägt, wobei der Computerprogrammträger eines von einem elektronischen Signal, einem optischen Signal, einem Funksignal oder einem computerlesbaren Speichermedium ist.

## Revendications

1. Procédé informatique mis en œuvre par une unité centrale de traitement réseau (10) pour fournir des informations de gestion spécifiques à un site, associées à un site de construction à accès restreint (101), à un premier dispositif utilisateur (41) dans un réseau de communication sans fil (20), ledit dispositif utilisateur (41) étant associé à un premier véhicule (40) se trouvant sur le site de construction à accès restreint (101) ou en route pour y entrer, le procédé comprenant :
*l'obtention* (401) d'informations de caractéristiques de véhicule à partir du premier dispositif utilisateur (41), dans lequel les informations de caractéristiques de véhicule comprennent des informations indiquant les opérations planifiées à effectuer par le premier véhicule (40) sur le site de construction à accès restreint (101) ;
*la détermination* (402) d'informations de gestion spécifiques au site associées au site de construction à accès restreint (101) sur la base des informations obtenues de caractéristiques de véhicule, dans lequel les informations indiquant les opérations planifiées à effectuer par le premier véhicule (40) sur le site de construction à accès restreint (101), via un ordre de travail, sont utilisées par l'unité centrale de traitement réseau (10) pour déterminer lesquels des services et ressources (110, 111, 112, 120, 121) du site de construction à accès restreint (101) le premier véhicule (40) pourrait être intéressé à utiliser ; et
*la fourniture* (403) des informations de gestion spécifiques au site déterminées au premier dispositif utilisateur (41),
dans lequel les informations de gestion spécifiques au site comprennent des informations indiquant les ressources disponibles (110-113 ; 120-121) au sein du site de construction à accès restreint (101) et des informations de planification en temps réel pour l'utilisation des ressources (110-113 ; 120-121) au sein du site de construction à accès restreint (101).

2. Procédé selon la revendication 1, dans lequel les informations de gestion spécifiques au site comprennent en outre un ou plusieurs des éléments suivants :
- des informations de navigation en temps réel à l'intérieur du site à accès restreint (101), et
- des informations de présence en temps réel d'un ou plusieurs deuxièmes dispositifs utilisateurs (51, 61, 71, 81, 91) associés à un ou plusieurs deuxièmes véhicules (50, 60, 70, 80, 90), respectivement, au sein du site de construction à accès restreint (101).

3. Procédé selon la revendication 1 ou 2, dans lequel les caractéristiques du véhicule
Les informations comprennent en outre un ou plusieurs des éléments suivants :
- l'emplacement du premier véhicule (40), et
- un niveau de carburant/énergie du premier véhicule (40).

4. Procédé selon l'une quelconque des revendications 1 à 3, dans lequel l'étape *d'obtention* (401) comprend en outre l'obtention d'informations de caractéristiques de véhicule à partir de chacun d'un ou plusieurs deuxièmes véhicules (50, 60, 70, 80, 90) et/ou d'un ou plusieurs deuxièmes dispositifs utilisateur (51, 61, 71, 81, 91) associés aux un ou plusieurs deuxièmes véhicules (50, 60, 70, 80, 90), respectivement, se trouvant sur le site à accès restreint (101) ou en route pour y accéder, et dans lequel *la détermination* (403) comprend en outre la détermination des informations de gestion spécifiques au site associées au site à accès restreint (101) à partir des informations de caractéristiques de véhicule obtenues à partir de chacun des un ou plusieurs deuxièmes véhicules (50, 60, 70, 80, 90) et/ou d'un ou plusieurs deuxièmes dispositifs utilisateur (51, 61, 71, 81, 91) associés aux un ou plusieurs deuxièmes véhicules (50, 60, 70, 80, 90), respectivement.

5. Procédé selon l'une quelconque des revendications 1 à 4, dans lequel *l'obtention* (401) comprend en outre l'obtention d'informations de préférences de conducteur à partir du premier dispositif utilisateur (41) provenant du conducteur (42) du premier véhicule (40), et dans lequel *la détermination* (402) comprend en outre la détermination des informations de gestion spécifiques au site associées au site de construction à accès restreint (101) sur la base des informations de préférences de conducteur obtenues.

6. Unité centrale de traitement réseau (10) destinée à fournir des informations de gestion spécifiques à un site, associées à un site à accès restreint (101), à un premier dispositif utilisateur (41) au sein d'un réseau de communication sans fil (20), dans laquelle le premier dispositif utilisateur (41) est associé à un premier véhicule (40) se trouvant sur le site à accès restreint (101) ou en route pour y accéder, dans laquelle l'unité centrale de traitement réseau (10) comprend un circuit de traitement (610) et une mémoire (620), dans laquelle le circuit de traitement (610) est configuré pour
obtenir des informations de caractéristiques de véhicule à partir du premier dispositif utilisateur (41), dans laquelle les information de caractéristiques de véhicule comprennent des informations sur des opérations planifiées du véhicule (40) sur le site à accès restreint (101), déterminer les informations de gestion spécifiques au site (101) sur la base information de caractéristiques de véhicule, dans laquelle les informations indiquant les opérations planifiées du véhicule (40) sur le site (101), via un ordre de travail, sont utilisées par l'unité centrale de traitement réseau (10) pour identifier lesquels des services et ressources (110, 111, 112, 120, 121) du site de construction à accès restreint (101) le premier véhicule (40) pourrait être intéressé à utiliser, et fournir les informations de gestion spécifiques au site (41), dans laquelle les informations de gestion spécifiques au site comprennent des informations indiquant des ressources disponibles (110, 111, 112, 120, 121) sur le site de construction à accès restreint (101) et des informations de planification en temps réel pour l'utilisation de ressources (110, 111, 112, 120, 121) au sein du site de construction à accès restreint (101).

7. Unité centrale de traitement réseau (10) selon la revendication 6, dans laquelle les informations de gestion spécifiques au site comprennent en outre un ou plusieurs des éléments suivants :
- des informations de navigation en temps réel à l'intérieur du site de construction à accès restreint (101), et
- des informations de présence en temps réel d'un ou plusieurs deuxièmes dispositifs utilisateurs (51, 61, 71, 81, 91) associés à un ou plusieurs deuxièmes véhicules (50, 60, 70, 80, 90), respectivement, au sein du site de construction à accès restreint (101).

8. Unité centrale de traitement réseau (10) selon la revendication 6 ou 7, dans laquelle les informations de caractéristiques de véhicule comprennent en outre un ou plusieurs des éléments suivants :
- l'emplacement du premier véhicule (40), et
- un niveau de carburant/énergie du premier véhicule (40).

9. Unité centrale de traitement réseau (10) selon l'une quelconque des revendications 6 à 8, dans laquelle le circuit de traitement (610) est configuré pour obtenir des informations de caractéristiques de véhicule à partir de chacun des un ou plusieurs deuxièmes véhicules (50, 60, 70, 80, 90) et/ou d'un ou plusieurs deuxièmes dispositifs utilisateur (51, 61, 71, 81, 91) associés aux un ou plusieurs deuxièmes véhicules (50, 60, 70, 80, 90), respectivement, se trouvant sur le site de construction à accès restreint (101) ou en route pour y accéder, et déterminer les informations de gestion spécifiques au site de construction à accès restreint (101) à partir des informations obtenues de caractéristiques de véhicule à partir de chacun des un ou plusieurs deuxièmes véhicules (50, 60, 70, 80, 90) et/ou des un ou plusieurs deuxièmes dispositifs utilisateur (51, 61, 71, 81, 91) associés aux un ou plusieurs deuxièmes véhicules (50, 60, 70, 80, 90), respectivement.

10. Unité centrale de traitement réseau (10) selon l'une quelconque des revendications 6 à 9, dans laquelle le circuit de traitement (610) est en outre configuré pour obtenir des informations de préférences de conducteur à partir du premier dispositif utilisateur (41) provenant du conducteur (42) du premier véhicule (40), et déterminer les informations de gestion spécifiques au site associées au site de construction à accès restreint (101) sur la base des informations obtenues de préférences de conducteur.

11. Procédé informatique mis en œuvre par un premier dispositif utilisateur (41) associé à un premier véhicule (40) pour obtenir des informations de gestion spécifiques à un site de construction à accès restreint (101), le procédé comprenant :
*la détermination* (501) que le premier véhicule (40) est sur le site de construction à accès restreint (101) ou en route pour y entrer, comme reconnu automatiquement par le premier dispositif utilisateur (41) via un ordre de travail indiquant un prochain emplacement pour le premier véhicule (40) dans une application fonctionnant sur le premier dispositif utilisateur (41) ;
*la fourniture* (502) d'informations de caractéristiques de véhicule associées au premier véhicule (40) à une unité centrale de traitement réseau (10) dans un réseau de communications sans fil (20), dans lequel les informations de caractéristiques de véhicule comprennent des informations indiquant les opérations planifiées à effectuer par le premier véhicule (40) sur le site de construction à accès restreint (101), et dans lequel les informations indiquant les opérations planifiées à effectuer par le premier véhicule (40) sur le site de construction à accès restreint (101), via l'ordre de travail, sont utilisables par l'unité centrale de traitement réseau (10) pour déterminer lesquels des services et ressources (110, 111, 112, 120, 121) sur le site de construction à accès restreint (101) le premier véhicule (40) pourrait être intéressé à utiliser ;
*l'obtention* (503), à partir de l'unité centrale de traitement réseau (10), d'informations de gestion spécifiques au site associées au site de construction à accès restreint (101) sur la base des informations de caractéristiques de véhicule fournies ; et
*l'affichage* (504) des informations de gestion spécifiques au site obtenues associées au site de construction à accès restreint (101) sur le premier dispositif utilisateur (41),
dans lequel les informations de gestion spécifiques au site comprennent des informations indiquant les ressources disponibles (110, 111, 112, 120, 121) au sein du site de construction à accès restreint (101) et des informations de planification en temps réel pour l'utilisation des ressources (110, 111, 112, 120, 121) au sein du site de construction à accès restreint (101).

12. Procédé selon la revendication 11, dans lequel la *détermination* (501) comprend en outre la détermination des informations de préférences de conducteur via une interface utilisateur du premier dispositif utilisateur (41) provenant du conducteur (42) du premier véhicule (40), *la fourniture (502)* comprend en outre la fourniture des informations de préférences de conducteur déterminées à l'unité centrale de traitement réseau (10) dans le réseau connecté sans fil (20), et *l'obtention* (503) comprend en outre l'obtention d'informations de gestion spécifiques au site associées au site de construction à accès restreint (101) sur la base des informations de préférences de conducteur fournies.

13. Premier dispositif utilisateur (41) associé à un premier véhicule (40) pour obtenir des informations de gestion spécifiques à un site de construction à accès restreint (101), ledit dispositif utilisateur (41) comprenant un circuit de traitement (710) et une mémoire (720), le circuit de traitement (710) étant configuré pour
déterminer que le premier véhicule (40) se trouve sur le site à accès restreint (101) ou est en route pour y entrer, comme reconnu automatiquement par le premier dispositif utilisateur (41) via un ordre de travail indiquant une prochaine position du premier véhicule (40) dans une application installée sur le premier dispositif utilisateur (41), fournir à une unité centrale de traitement réseau (10) du réseau de communication sans fil (20) des informations de caractéristiques de véhicule associées au premier véhicule (40), et dans lequel les informations de caractéristiques de véhicule comprennent les opérations planifiées que le véhicule (40) doit effectuer sur le site de construction à accès restreint (101), via l'ordre de travail, sont utilisables par l'unité centrale de traitement réseau (10) pour déterminer lesquels des services et ressources (110, 111, 112, 120, 121) du site de construction à accès restreint (101) le premier véhicule (40) pourrait être intéressé à utiliser, obtenir à partir de l'unité centrale de traitement réseau (10) des informations de gestion spécifiques au site associées au site de construction à accès restreint (101) sur la base des informations de caractéristiques de véhicule fournies, et afficher les informations de gestion spécifiques au site obtenues associées au site de construction à accès restreint (101) sur le premier dispositif utilisateur (41), dans lequel les informations de gestion spécifiques au site comprennent des informations indiquant des ressources disponibles (110, 111, 112, 120, 121) au sein du site de construction à accès restreint (101) et des informations de planification en temps réel pour l'utilisation des ressources (110, 111, 112, 120, 121) au sein du site de construction à accès restreint (101).

14. Premier dispositif utilisateur (41) selon la revendication 13, dans lequel le circuit de traitement (710) est en outre configuré pour déterminer les informations de préférences de conducteur via une interface utilisateur du premier dispositif utilisateur (41) provenant du conducteur (42) du premier véhicule (40), fournir les informations de préférences de conducteur déterminées à l'unité centrale de traitement réseau (10) dans le réseau connecté sans fil (20) et obtenir des informations de gestion spécifiques au site associées au site de construction à accès restreint (101) sur la base des informations de préférences de conducteur fournies.

15. Premier dispositif utilisateur (41) selon la revendication 13 ou 14, dans lequel le premier dispositif utilisateur (41) est un dispositif de communication sans fil autonome ou un dispositif de communication sans fil intégré au premier véhicule (40), conçu pour fonctionner au sein d'un réseau de télécommunications sans fil.

16. Produit de programme informatique comprenant des moyens de code de programme pour effectuer les étapes selon l'une quelconque des revendications 1 à 5 ou 11 à 12 lorsque ledit programme est exécuté sur un circuit de traitement (610 ; 710) d'une unité centrale de traitement (10) ou d'un premier dispositif utilisateur (41).

17. Support de programme informatique transportant un programme informatique selon la revendication 16, dans lequel le support de programme informatique est un signal électronique, un signal optique, un signal radio ou un support de stockage lisible par ordinateur.
